# EUROPEAN PATENT SPECIFICATION

(11) **EP 1 757 490 B1**
(45) Date of publication and mention of the grant of the patent: **20.04.2011**
(21) Application number: 06012229.8
(22) Date of filing: 14.06.2006
(51) Int. Cl.: B60R 21/0136

(54) **Vehicle impact detection system**
System zur Erkennung eines Fahrzeugaufpralls
Système de détection d'impact pour véhicule

(30) Priority: 22.08.2005 US 207963
(43) Date of publication of application: 28.02.2007
(73) Proprietor: KEY SAFETY SYSTEMS, INC., Sterling Heights, MI 48314 (US)
(72) Inventor: Stuve, Steven R., Lake Mills, Wisconsin 53551 (US)
(74) Representative: Gislon, Gabriele

(56) References cited:
- DE-A1- 10 321 160
- US-A1- 2005 154 530
- US-B1- 6 329 910
- MINGFAN LI ET AL: "Giant magnetostrictive magnetic fields sensor based on dual fiber Bragg gratings" NETWORKING, SENSING AND CONTROL, 2005. PROCEEDINGS. 2005 IEEE TUCSON, AZ, USA MARCH 19-22, 2005, PISCATAWAY, NJ, USA,IEEE, 19 March 2005 (2005-03-19), pages 490-495, XP010813446 ISBN: 0-7803-8812-7

## Description

The present invention relates to vehicle collision sensors that detect a collision with a pedestrian or animal.

Improvements in the structural design of motor vehicles, combined with passive safety devices such as seat belts, and active safety devices such as airbags and seatbelt retractors, have greatly decreased death and injury to motor vehicle occupants involved in collisions. The active safety devices respond to sensors that detect the onset of a collision, and activate or deploy devices to minimize vehicle occupant injuries.

In a vehicle collision with a pedestrian, the pedestrian may be gravely injured or killed. Recently there have been efforts to develop deployable safety devices designed to benefit the pedestrian during a vehicle-pedestrian collision. These safety devices raise the vehicle bonnet, or deploy an airbag to reduce injury to the pedestrian's head. Another type of collision that may be relatively benign is a collision with an animal such as a deer. A hazard of this type of collision is that the animal may pass over the bonnet of the vehicle and crash through the front windscreen. Safety devices that respond to the onset of a vehicle-animal collision are being considered.

US 6 784 792 B2 discloses using piezoelectric film sensors to detect pressure and deformation caused by impact with a pedestrian, and comparing the sensor output signals to a reference quantity to derive a first decision criteria, and discloses deriving a second criteria due to the change in velocity or acceleration of the vehicle. Piezoelectric strips have been used to detect the onset of a collision, such as disclosed in US 6 559 763 B2. Measurement of strain energy to detect a side impact using a piezoelectric sensor is disclosed in US 5 797 623 A.

Using a piezoelectric film to detect accelerations produced by hydraulic percussion devices is known from US 6 737 981 B2. The frequency and amplitude of a magnetostrictive sensor have been analyzed to determine the position of the collision in the transverse direction along a stress conducting member, as in US 6 329 910 B1.

DE10321160 concerns a vehicle impact detection system that makes use of a piezo cable as an impact sensor which allows up to four different measuring principles by means of the piezo cable. The piezo cable is connected with an evaluation device that generates a signal as a function of the evaluation and sends the signal to a controller for support systems that can receive still further signals from a further sensor technology such as for example an interior sensor technology or other impact sensors such as acceleration sensors. Pedestrians are distinguished from other objects via plausibility analysis and the piezo measurements are triggered by capacitive or inductive sensors.

FIG. 1 is a side elevation view, partly cut away, of a motor vehicle equipped with the vehicle impact detection system of this invention impacting a pedestrian.

FIG. 2 is an enlarged view of a portion of the bumper of the motor vehicle of FIG. 1 illustrating the mounting position of a piezo film sensor.

FIG. 3 is a graph of amplitude and time of the output of a piezo film sensor and a Terfenol-D sensor mounted to a flat plate and struck by a rubber hammer.

FIG. 4 is a graph of amplitude and time of the output of a piezo film sensor and a Terfenol-D sensor mounted to a flat plate struck by a metal ball bearing.

A vehicle-pedestrian collision and a vehicle-animal collision are similar in that the vehicle impacts with a relatively low mass soft tissue object. Sensors are needed that can differentiate this type of collision from collisions with large massive objects, or collisions with less massive but rigid objects, so that the deployment or non-deployment of active safety devices can be optimized.

The vehicle impact detection system of this invention uses a piezo or piezoelectric film mounted to a front vehicle bumper. Piezo fluoropolymer film (PVDF) is a piezoelectric material that is a relatively new class of piezoelectric sensors. The PVDF material is a thin plastic polymer sheet that has a thin electrically conductive nickel copper alloy deposited on each side. This material is called piezo film. To get an electrical output from a piezo film an electrical connection to the electrically conductive coating on each side of the PVDF material is made. The piezo film used in this invention is selected and mounted so as to have a greater sensitivity to low-frequency shock waves as compared to high-frequency shock waves. The frequency and amplitude of the shock waves is compared to a selected range of frequencies and amplitudes that are indicative of a collision with a soft tissue body. The output of the piezo film is compared with the output of a second sensor which is more sensitive than piezo film to high-frequency shock waves and less sensitive than piezo film to low-frequency shock waves. The second sensor could be, for example, a Terfenol -D based sensor

This invention provides an animal or pedestrian impact detection system that can differentiate between a vehicle impact with an animal or pedestrian and a vehicle impact with massive or lightweight rigid object.

This invention further provides an impact sensor linked to a safety system that is deployed in the event of striking an animal to protect the vehicle occupants.

This invention further provides the use of multiple sensors to distinguish between an impact with an animal or pedestrian, and impacts with more rigid objects.

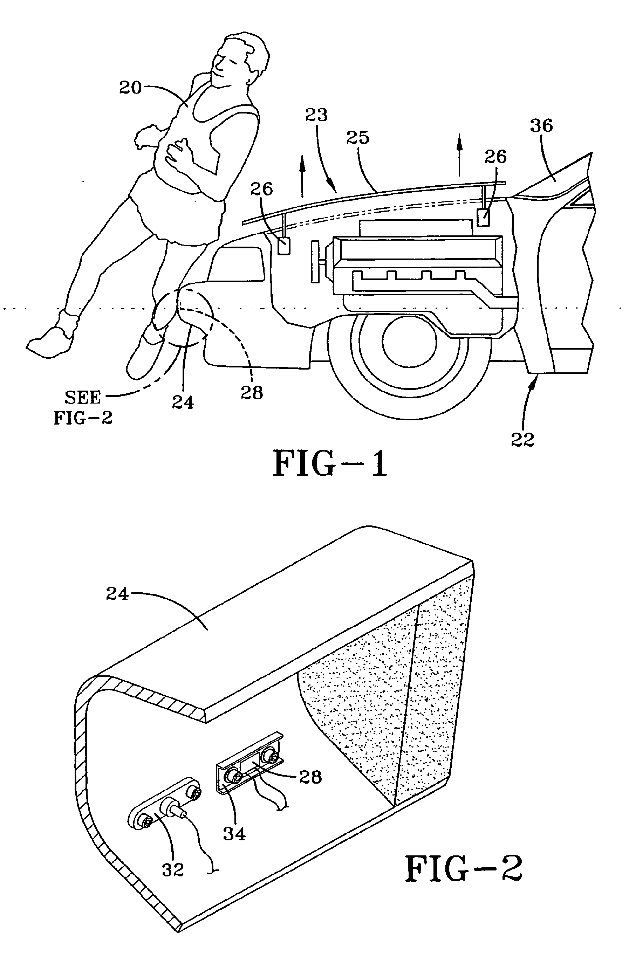

In FIG. 1 a pedestrian 20 is shown being impacted by a motor vehicle 22 that is equipped with the vehicle impact detection system 23 of this invention. In the event of such an impact, the pedestrian 20 normally impacts the bumper 24 first, followed by an impact with the car's bonnet 25. To allow timely activation of active devices 26 which form part of a safety system, and which are designed to prevent harm to the pedestrian, sensors are needed that indicate an impact with a pedestrian. The system 23 has a piezo film sensor 28 that can be used to differentiate between pedestrian impacts and other types of impacts. The piezo film sensor 28 is used to differentiate soft, low mass impacts, from collisions into a barrier or another vehicle, and also is used to differentiate soft low mass impacts from bumper strikes by rocks, ice or other road debris.

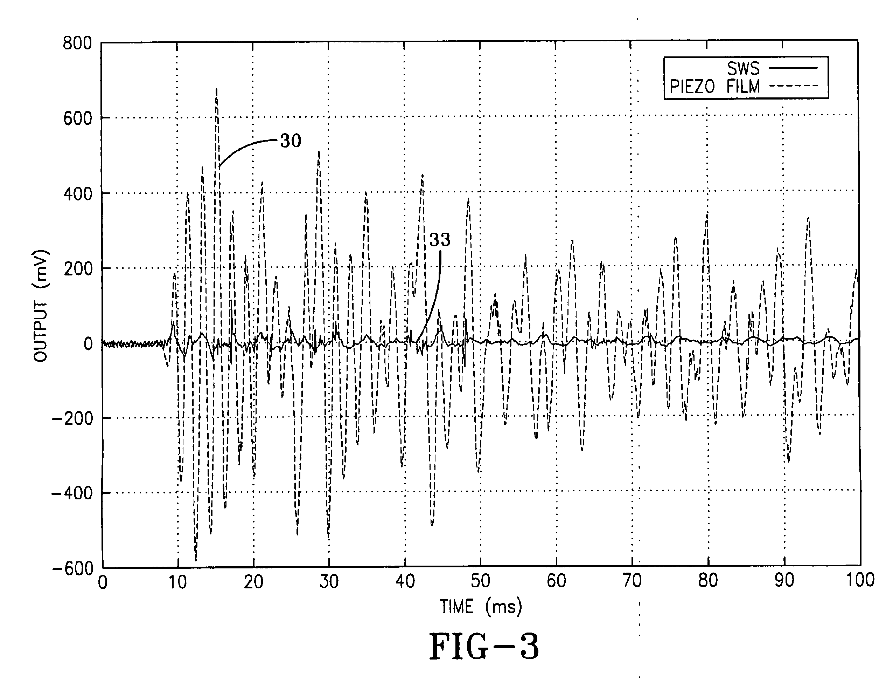

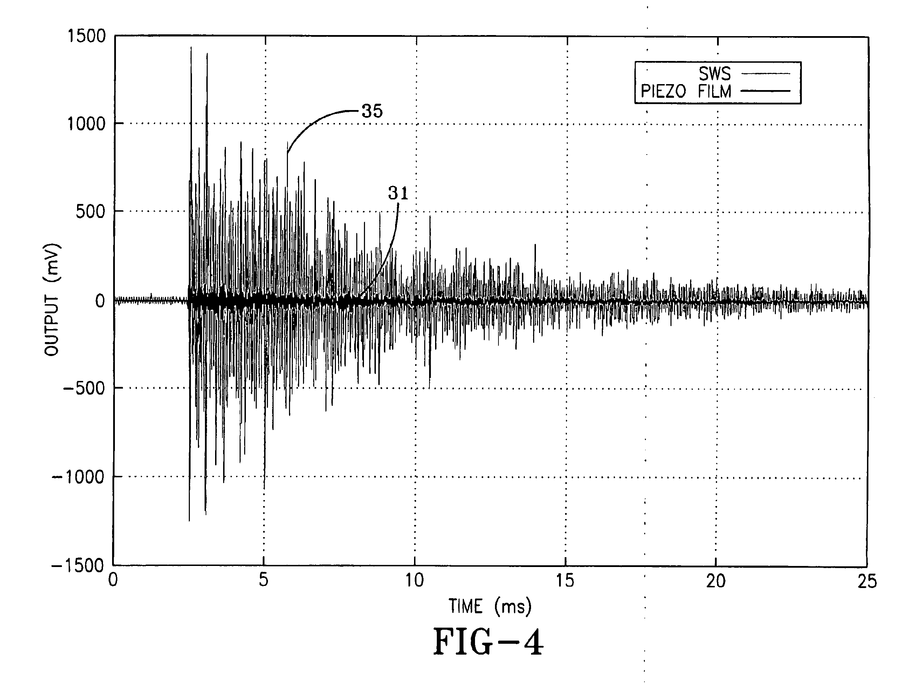

As shown in FIG. 3 it has been found experimentally that piezo film sensors are sensitive to low-frequency shock waves, when a rubber hammer was used to create stress waves 30 in a metal plate (not shown). The resulting stress waves 30 have a frequency in the range of 500-600 Hz and an amplitude of between 200 and 600 mV as detected by the piezo film sensor 28. FIG. 4 shows the frequency and amplitude response, i.e. the stress waves 31, of the piezo film sensor 28 responding to a 6.3 mm diameter steel ball bearing dropped onto the metal plate from a height of 1 m.

The ball bearing impact produced a frequency of about 22,000 Hz with an amplitude of about 200 mV. By using a ratio between the amplitude of the signal produced by the piezo film sensor 28 at two different frequencies, the impact of a pedestrian or animal can be differentiated from a stone strike, or an impact with a rigid object. For example, the output of the piezo film sensor 28 could be analyzed as a power spectral density function, which could then be correlated with the type of impact. A power spectral density function is defined as the Fourier transform of the autocorrelation sequence of the time series, or the squared modulus of the Fourier transform of the time series, scaled by a proper constant term.

An alternative embodiment employs a Terfenol-D type sensing element 32 such as disclosed in US 2005-0194240 A1. The Terfenol-D sensor 32 is a type of giant magnetostrictive sensing element with a composition of (Tb0.3 Dy0.7 Fe1.92). As disclosed in US 2005-0194240 A1 a shock sensor employs a Terfenol-D sensing element positioned inside a sensing coil. A permanent biasing magnet is positioned in engagement with the Terfenol-D sensing element, and a spacer engages the Terfenol-D sensing element and extends from a housing that surrounds the biasing magnet, the Terfenol-D sensing element, and the sensing coil. The housing has a beam with two spaced-apart mounting holes through which fasteners extend to mount the shock sensor to a vehicle structural member. The mounting of the beam places the spacer in compression against the vehicle structural member. The spacer, the Terfenol-D sensing element, and the biasing magnet are packaged in a sleeve that is positioned in a cylindrical portion of the beam that extends perpendicular to the beam. The beam is mounted by the fasteners to the vehicle structural member. A bobbin about which the sensing coil is wound is positioned over the Terfenol-D sensing element and the biasing magnet, and the bobbin is over-molded to the beam. Compressive waves introduced in the vehicle structural member to which the shock sensor is mounted travel through the spacer which is held in engagement with the structural member, and from the spacer to the Terfenol-D sensing element. The strain in the Terfenol-D sensing element under the influence of the magnetic field of the biasing magnet produces a substantial change in magnetic field strength that results in the generation of voltage in the output leads of the coil. The sensor may be passive and have a large voltage output that is easily detected and digitized. In an alternative embodiment, a DC current can be supplied to the sensing coil to provide the biasing magnetic field. The voltage produced by shock traveling through the Terfenol-D sensing element can be detected by a high frequency filter that separates the shock sensing signal from the applied DC biasing current. A simple series-connected capacitor in the sensing output of the shock sensor can function as the high frequency filter.

The Terfenol-D sensor 32 shown in FIG. 2 is located on the bumper 24 adjacent to the piezo film sensor 28, or may be spaced on the bumper from the piezo film sensor 28. The Terfenol-D sensor 32 has a frequency response that is substantially opposite the frequency response of the piezo film sensor 28. As shown in FIG. 3, the Terfenol-D sensor responds to the rubber hammer blow with resulting stress waves 33 producing an output signal of about 50 mV, but, as shown in FIG. 4, the Terfenol-D sensor responds to the ball bearing hit and resulting stress waves 35 with an amplitude of over 1000 mV. It can be concluded that the output of both sensors 28, 32 may be compared, so that when the amplitude of the piezo film sensor 28 exceeds the amplitude of the Terfenol-D sensor 32 the motor vehicle could be concluded to be impacting a soft body such as a pedestrian or an animal. In contrast, when the amplitude of the Terfenol-D sensor 32 is greater than the amplitude of the piezo film sensor 28, the motor vehicle could be concluded to be impacting a rigid body. Again, the power spectral density function of the output of each sensor 28, 32 can be compared, or combined, and when frequencies below some cut off frequency, for example 1000 Hz or 2000 Hz, have a greater power density than the frequencies above the cut off frequency, then a soft body impact is taking place. When the situation is reversed a collision with a rigid body is taking place.

The output of the piezo film sensor 28 or the piezo film sensor and the Terfenol -D sensor 32, can be combined with the output of acceleration sensors mounted to the motor vehicle as part of a more comprehensive collision detection system. The output of the acceleration sensors can provide an indication of the mass of the object with which the vehicle has collided. The mass of the object, and the power spectral density, can be used to decide the type of object that has been impacted. Other data available from the vehicle safety system or other vehicle sensors such as vehicle speed can also be employed, for example to differentiate between pedestrians that are typically struck at lower speeds, and animals that are typically struck at higher speeds.

The sensors 28, 32, which are mounted directly to the bumper 24, provide an early indication of the type of impact, providing maximum time for activating active safety systems. Active safety systems can, for example, elevate the motor vehicle's bonnet 25 either to prevent a pedestrian's head from impacting rigid components under the bonnet 25, or to allow the bonnet 25 to be raised sufficiently to prevent an animal with which the vehicle is colliding from breaking through the vehicle windshield 36.

Piezo fluoropolymer film sensors are known and are, for example, supplied by Measurement Specialties, Inc. The piezo film sensor may be constructed from other film materials. Examples of piezoelectric polymers that are known today include polyparaxylene, poly-bischloromethyuloxetane (Penton), aromatic polyamides, polysulfone, polyvinyl fluoride, synthetic polypeptide and cyanoethul cellulose. The film sensor 28 may be bonded to a rigid support 34, as shown in FIG. 2, which is riveted, screwed or bolted to the bumper 24 in a way similar to the Terfenol-D type sensor disclosed in US 2005-0194240 A. Alternatively, the piezo film sensor may be bonded directly to or formed with the bumper 24. Similarly, the Terfenol-D Type sensor may be mounted by screws, rivets or bolts to the bumper 24.

## Claims

1. A vehicle impact detection system (23) for differentiating between an impact of a front bumper (24) of a motor vehicle with a rigid object and an impact of the front bumper (24) with a pedestrian or animal, the vehicle impact detection system (23) comprising:
a piezo sensor (28) mounted to the front bumper (24) of the motor vehicle;
a sensing element (32) mounted to the front bumper (24) of the motor vehicle adjacent to the piezo sensor (28); and a device for analyzing and comparing signals representing the output of the piezo sensor (28) and the sensing element (32) to determine if the motor vehicle has impacted a pedestrian or an animal, **characterized in that** said piezo sensor (28) is a piezo film sensor that has a greater sensitivity to low-frequency shock waves as compared to high-frequency shock waves and the sensing element (32) is a giant magnetostrictive sensing element that has a greater sensitivity to high-frequency shock waves and is less sensitive to low-frequency shock waves than the piezo film sensor (28), and **in that** the comparison of the signal generated by the piezo film sensor (28) with the signal generated by the magnetostrictive sensing element (32) comprises determining a ratio of relative signal strength, and comparing the signal generated by the piezo film sensor (28) with at least two amplitude standards, and comparing the signal generated by the magnetostrictive sensing element with at least two amplitude standards.

2. A vehicle impact detection system (23) according to claim 1 wherein the giant magnetostrictive sensing element (32) is a Terfenol-D based sensing element.

3. A vehicle impact detection system (23) according to claim 1 or 2 wherein the device for analyzing and comparing signals: (a) determines from a signal generated by the piezo film sensor (28) a first amplitude at a frequency or range of frequencies below 1,000Hz; (b) determines from the signal generated by the magnetostrictive sensing element (32) a second amplitude at a frequency or range of frequencies above 10,000 Hz; and (c) compares the first amplitude with the second amplitude to determine if an impact with a pedestrian or animal has occurred.

4. A vehicle impact detection system (23) according to any of claims 1 - 3 further comprising an acceleration sensor that provides a signal to the device for analyzing and comparing signals which employs the signal from the acceleration sensor in determining if the motor vehicle has impacted a pedestrian or an animal.

5. A vehicle impact detection system (23) according to any of claims 1 - 4 wherein if the device for analyzing and comparing signals determines that the motor vehicle has impacted a pedestrian or an animal it sends a signal to activate a safety device (26) in the vehicle.

## Patentansprüche

1. Fahrzeugaufprall-Erkennungssystem (23), um zwischen einem Zusammenprall eines vorderen Stoßfängers (24) eines Kraftfahrzeugs mit einem starren Gegenstand und einem Zusammenprall des vorderen Stoßfängers (24) mit einem Fußgänger oder einem Tier zu unterscheiden, wobei das Fahrzeugaufprall-Erkennungssystem (23) Folgendes umfasst:
einen Piezosensor (28), der an dem vorderen Stoßfänger (24) des Kraftfahrzeugs angebracht ist,
ein Sensorelement (32), das angrenzend an den Piezosensor (28) an dem vorderen Stoßfänger (24) des Kraftfahrzeugs angebracht ist, und eine Einrichtung zum Analysieren und Vergleichen von Signalen, welche die Ausgabe des Piezosensors (28) und des Sensorelements (32) darstellen, um zu bestimmen, ob das Kraftfahrzeug auf einen Fußgänger oder ein Tier geprallt ist, **dadurch gekennzeichnet, dass** der Piezosensor (28) ein Piezoschichtsensor ist, der eine größere Empfindlichkeit für niederfrequente Stoßwellen, verglichen mit hochfrequenten Stoßwellen, hat, und das Sensorelement (32) ein riesenmagnetorestriktives Sensorelement ist, das eine größere Empfindlichkeit für hochfrequente Stoßwellen hat und für niederfrequente Stoßwellen weniger empfindlich ist als der Piezoschichtsensor (28), und dadurch, dass der Vergleich des durch den Piezoschichtsensor (28) erzeugten Signals mit dem durch das magnetorestriktive Sensorelement (32) erzeugten Signal das Bestimmen eines Verhältnisses der relativen Signalstärke und das Vergleichen des durch den Piezoschichtsensor (28) erzeugten Signals mit wenigstens zwei Amplitudenstandards und das Vergleichen des durch das magnetorestriktive Sensorelement erzeugten Signals mit wenigstens zwei Amplitudenstandards umfasst.

2. Fahrzeugaufprall-Erkennungssystem (23) nach Anspruch 1, wobei das riesenmagnetorestriktive Sensorelement (32) ein Sensorelement auf der Grundlage von Terfenol D ist.

3. Fahrzeugaufprall-Erkennungssystem (23) nach Anspruch 1 oder 2, wobei die Einrichtung zum Analysieren und Vergleichen von Signalen: (a) aus einem durch den Piezoschichtsensor (28) erzeugten Signal eine erste Amplitude bei einer Frequenz oder einem Frequenzbereich unterhalb von 1 000 Hz bestimmt, (b) aus dem durch das magnetorestriktive Sensorelement (32) erzeugten Signal eine zweite Amplitude bei einer Frequenz oder einem Frequenzbereich oberhalb von 10 000 Hz bestimmt und (c) die erste Amplitude mit der zweiten Amplitude vergleicht, um zu bestimmen, ob ein Zusammenprall mit einem Fußgänger oder einem Tier stattgefunden hat.

4. Fahrzeugaufprall-Erkennungssystem (23) nach einem der Ansprüche 1 bis 3, das ferner einen Beschleunigungssensor umfasst, der ein Signal für die Einrichtung zum Analysieren und Vergleichen von Signalen bereitstellt, die das Signal von dem Beschleunigungssensor bei der Bestimmung, ob das Kraftfahrzeug mit einem Fußgänger oder einem Tier zusammengeprallt ist, einsetzt.

5. Fahrzeugaufprall-Erkennungssystem (23) nach einem der Ansprüche 1 bis 4, wobei, falls die Einrichtung zum Analysieren und Vergleichen von Signalen bestimmt, dass das Kraftfahrzeug mit einem Fußgänger oder einem Tier zusammengeprallt ist, sie ein Signal sendet, um eine Sicherheitseinrichtung (26) in dem Fahrzeug zu aktivieren.

## Revendications

1. Système de détection d'impact pour véhicule (23) pour faire la différence entre un impact d'un pare-chocs avant (24) d'un véhicule à moteur avec un objet rigide, et un impact du pare-chocs avant (24) avec un piéton ou un animal, le système de détection d'impact pour véhicule (23) comprenant :
un capteur piézoélectrique (28), monté sur le pare-chocs avant (24) du véhicule à moteur ;
un élément de détection (32), monté sur le pare-chocs avant (24) du véhicule à moteur, près du capteur piézoélectrique (28) ; et un dispositif pour analyser et comparer des signaux représentant la sortie du capteur piézoélectrique (28) et de l'élément de détection (32), pour déterminer si le véhicule à moteur a heurté un piéton ou un animal, **caractérisé en ce que** ledit capteur piézoélectrique (28) est un capteur piézoélectrique à film, présentant une sensibilité plus grande aux ondes de choc basse fréquence qu'aux ondes de choc haute fréquence, l'élément de détection (32) étant un élément de détection à magnétostriction géante, présentant une sensibilité accrue aux ondes de choc haute fréquence et étant moins sensible aux ondes de choc basse fréquence que le capteur piézoélectrique à film (28), et **en ce que** la comparaison du signal émis par le capteur piézoélectrique à film (28) avec le signal émis par l'élément de détection magnétorestrictif (32) comprend la détermination d'un rapport de l'intensité relative du signal, la comparaison du signal émis par le capteur à film piézoélectrique (28) avec au moins deux amplitudes standard, et la comparaison du signal émis par l'élément de détection magnétorestrictif avec aux moins deux amplitudes standard.

2. Système de détection d'impact pour véhicule (23) selon la revendication 1, dans lequel l'élément de détection à magnétostriction géante (32) est un élément de détection à base de Terfenol-D.

3. Système de détection d'impact pour véhicule (23) selon les revendications 1 ou 2, dans lequel le dispositif destiné à analyser et comparer les signaux : (a) détermine, sur la base d'un signal émis par le capteur piézoélectrique à film (28), une première amplitude en présence d'une fréquence ou d'une plage de fréquences inférieures à 1.000 Hz; (b) détermine, sur la base du signal émis par l'élément de détection magnétorestrictif (32), une deuxième amplitude en présence d'une fréquence ou d'une plage de fréquences supérieures à 10.000 Hz; et (c) compare la première amplitude avec la deuxième amplitude pour déterminer s'il y a eu un impact avec un piéton ou un animal.

4. Système de détection d'impact pour véhicule (23) selon l'une quelconque des revendications 1 à 3, comprenant en outre un capteur d'accélération, transmettant un signal au dispositif destiné à analyser et comparer les signaux, qui utilise le signal transmis par le capteur d'accélération pour déterminer si le véhicule à moteur a heurté un piéton ou un animal.

5. Système de détection d'impact pour véhicule (23) selon l'une quelconque des revendications 1 à 4, dans lequel, lorsque le dispositif destiné à analyser et comparer les signaux détermine que le véhicule à moteur a heurté un piéton ou un animal, il transmet un signal pour actionner un dispositif de sécurité (26) dans le véhicule.
